# EUROPÄISCHE PATENTSCHRIFT

(11) **EP 4 015 730 B1**
(45) Veröffentlichungstag und Bekanntmachung des Hinweises auf die Patenterteilung: **28.08.2024**
(21) Anmeldenummer: 20020618.3
(22) Anmeldetag: 15.12.2020
(51) Int. Cl.: E04C 2/26, E04B 5/02, E04C 2/16

(54) **LEHM-HOLZ-VERBUNDELEMENT**
CLAY-WOOD COMPOSITE ELEMENT
ÉLÉMENT COMPOSITE ARGILE-BOIS

(43) Veröffentlichungstag der Anmeldung: 22.06.2022
(73) Patentinhaber: rematter AG, 6302 Zug (CH)
(72) Erfinder: ROS, Nico, CH-4125 Riehen (CH); HUBER, Tobias, D-79418 Schliengen (DE)
(74) Vertreter: SONN Patentanwälte GmbH & Co KG

(56) Entgegenhaltungen:
- DE-A1- 10 338 794
- DE-C- 802 180
- DE-U1- 202005 011 602

## Beschreibung

Die vorliegende Erfindung betrifft ein Verfahren zum Herstellen eines Lehm-Holz-Verbundelements zur Verwendung als Deckenelement in einem Gebäude. Weiters betrifft die Erfindung ein Lehm-Holz-Verbundelement. Ein Lehm-Holz Verbundelement nach dem Oberbegriff des Anspruchs 8 ist in DE202005011602 U1 beschrieben.

Die Baubranche gehört in Europa zu den größten Ressourcenverbrauchern. Beispielsweise werden in Deutschland ungefähr 90 % der mineralischen Rohstoffe für den Bau von Gebäuden verwendet, das sind ungefähr 517 Millionen Tonnen. Dies bedeutet, dass 52 % des deutschen Abfallaufkommens auf die Baubranche zurückzuführen sind. Der Ressourcenverbrauch von Tragwerken von Gebäuden stellt dabei einen wesentlichen Faktor dar. Von großer Bedeutung sind hierbei zum einen die Primärenergie, die in ein Tragwerk einfließt und nicht erneuerbar ist, das Treibhauspotenzial in CO₂-Äquvalenten und die Entsorgung bzw. das Recycling der Materialen.

Für Tragwerke werden europaweit größtenteils Holz, Beton und Stahl verwendet. Holztragwerke schneiden in ökologischer Hinsicht grundsätzlich vorteilhaft ab, sind jedoch im Bereich der nicht erneuerbaren Energie nicht ideal, denn auch bei der Verarbeitung von Holz werden Treibhausgase ausgestoßen. Auch werden für Holz-Verbundwerkstoffe und Holz-Verbundelemente und Holzwerkstoffe oftmals Klebemittel eingesetzt, welche einen biologischen Abbau des damit verarbeiteten Holzes (zum Beispiel in Kompostieranlagen) nicht mehr zulassen.

Bei einem Tragwerk wird am meisten Material für die Decken gebraucht. Oftmals ist über 50 % des Materialverbrauchs für ein Gebäude der Deckenkonstruktion zuzurechnen. Die Deckenkonstruktion hat neben der primären Anforderung des Tragwerks, einen Raum zu überspannen, meistens eine Reihe weiterer Anforderungen zu erfüllen: Anforderungen des Brandschutzes, thermische Anforderungen (Wärmeisolation) und akustische Anforderungen beispielsweise im Sinne des Schallschutzes. Diese Anforderungen werden im Holzbau meistens durch zusätzliche Schichten (Brandschutzschichten, Schüttungen) und durch Überdimensionierung (Opferschicht, welche im Brandfall abbrennen kann) erfüllt. Diese Maßnahmen verschlechtern deutlich die Ressourceneffizienz, da zum einen mehr Material verbraucht wird und zum anderen beim Abbruch Schichten aufwendig getrennt werden müssen, was oftmals nicht geschieht.

Lehm-Holz-Verbund ist eine interessante Kombination von Materialien für ressourcenschonende Deckenelemente. Der Lehm könnte als Brandschutz für das Holz eingesetzt werden und zugleich als thermische und akustische Masse dienen. Der traditionelle Aufbau von Lehmdecken erfolgt über ein Primärtragwerk aus Holzbalken und ein Sekundärtragwerk aus Brettern, welche zwischen die Holzbalken gespannt werden. Das Sekundärtragwerk kann entweder als geschlossener Bretterboden ausgeführt sein, auf dem reiner Lehm lagert, oder der Lehm kann als Strohlehm über Bretter gespannt werden (sog. Stakendecken), doch in beiden Fällen bildet der Lehm nur eine thermische und akustische Masse. Er löst weder das Brandschutzproblem, da er auf eine tragende Holzschicht angewiesen ist, welche wiederum brennbar ist, noch trägt er sich selbst.

Lehm-Holz-Decken haben folglich in Europa im zeitgemäßen Bau kaum eine Bedeutung für Deckenkonstruktionen, da sie nicht die Anforderungen an die Statik erfüllen. Zudem ist diese Bauweise handwerklich sehr aufwendig und kann kaum automatisiert werden, um gegenüber einer Betondecke ökonomisch konkurrenzfähig zu werden.

Der Erfindung liegt daher die Aufgabe zugrunde, Lehm-Holz-Verbundelemente für ein Deckensystem zu schaffen, das den Primärenergie-Verbrauch und den Ausstoß von CO₂-Äquivalenten minimiert, und eine vollständige Wiederverwendung der Ressourcen oder deren biologischer Abbau sicherstellt. Des Weiteren müssen die bautechnischen Anforderungen an den Brandschutz, die Bauphysik (akustische Masse und thermische Masse) sowie die ökonomische Skalierbarkeit gegeben sein. Um eine möglichst ökonomische Herstellung sicherstellen zu können, ist der Grad der Automatisierung der Herstellung von größter Bedeutung.

Zur Lösung dieser Aufgabe sieht die Erfindung gemäß einem ersten Aspekt ein Verfahren nach dem Anspruch 1 Bei dem erfindungsgemäßen Verfahren werden somit längliche Träger bei der Herstellung des Lehm-Holz-Verbundelements zur Verwendung als Deckenelement in einem Gebäude auf einer planen Fläche aufgelegt und beim Verfüllen der Zwischenräume der Abstand zwischen den Trägern festgehalten, sodass durch einen Verdichtungsschritt des Lehms in vertikaler Richtung, was beispielsweise durch Stampfen mit einer Stampfmaschine oder einer Rüttelplatte erfolgt, eine Verdichtung auch in horizontaler Richtung erreicht wird, wodurch der Lehm horizontal zwischen den Trägern unter Druckspannung gesetzt wird. Dadurch, dass die länglichen Träger durch geeignete Mittel in ihrem vorgegebenen Querabstand gehalten werden, bleibt die horizontale, in Querrichtung wirkende Druckspannung langfristig erhalten, was zu selbstragenden Eigenschaften des Lehms führt und der Lehm vertikale Lasten ohne das Vorsehen von Sekundärtragwerken aufnehmen kann. Hierdurch werden sämtliche Anforderungen an die Statik eines Deckenelements zur Errichtung von Deckenkonstruktionen im Gebäudebau erfüllt. Auf Grund der selbsttragenden Eigenschaften der Lehmschicht kann auf die Anordnung einer die Lehmschicht von unten abstützenden Struktur verzichtet werden, sodass der Lehm in direkter Verbindung mit der Luft des darunter liegenden Raumes des Gebäudes steht, wodurch ein Wärme- und Feuchtigkeitsaustausch mit dem Raum stattfinden kann. Dadurch werden die hervorragenden thermischen und akustischen Eigenschaften des Baustoffes Lehm voll zur Geltung gebracht.

Das erfindungsgemäße Verfahren ist einfach in der Handhabung, sodass sich der Lehm-Holz-Verbund effizient und automatisiert herstellen lässt. Der Energieverbrauch und der Ressourceneinsatz sind minimal. Das Einbringen des Lehms und das Verdichten des Lehms können ohne weiteres automatisiert werden, wobei diese Schritte z.B. von einem Roboter ausgeführt werden können.

Auf Grund des Verzichts auf Sekundärtragwerke kann der Holzanteil einer Deckenkonstruktion reduziert werden. Weil der Lehmanteil deutlich weniger Energie in der Verarbeitung benötigt als Holz, liegen der CO₂-Ausstoß und der Energieverbrauch einer solchen Deckenkonstruktion um den Faktor 2 bis 5 unter den Werten einer reinen Holzkonstruktion. Zudem ist die Konstruktion biologisch abbaubar, wenn, wie dies einer bevorzugten Ausbildung entspricht, die länglichen Träger aus Vollholz bestehen. Weiters lassen sich die Materialen Holz und Lehm sauber trennen und wiederverwenden.

Schließlich können Materialtransporte um bis zu 80 % eingespart werden, wenn bei lehmhaltigen Böden einerseits Aushub für die Herstellung der Decken verwendet und andrerseits Holz eingespart werden kann.

Ein weiterer großer Vorteil des erfindungsgemäßen Verfahrens und des daraus resultierenden Lehm-Holz-Verbundelements ist darin zu sehen, dass der Lehm die Holzkonstruktion vor seitlichem Abbrand der Träger schützt. Im Brandfall wird der Lehm zu Ton gebrannt, der eine noch höhere Festigkeit aufweist als ungebrannter Lehm, sodass die Statik des Gebäudes nicht beeinträchtig wird und ein Einsturz des Gebäudes im Brandfall unwahrscheinlicher ist als bei herkömmlichen Deckenkonstruktionen.

Der in den Zwischenräumen angeordnete Lehm ist bevorzugt ein reiner Lehm, d.h. ein Lehm, der keine organischen oder verrottbaren Bestandteile, wie z.B. Stroh oder Holz, enthält.

Gemäß einer bevorzugten Ausbildung der Erfindung wird der Lehm in einer Dicke von 5 - 20 cm in den Zwischenraum bzw. die Zwischenräume eingebracht.

Gemäß einer bevorzugten Ausführungsform der vorliegenden Erfindung wird der Querabstand durch zumindest ein quer zu den länglichen Trägern angeordnetes und an den Trägern festgelegtes Holzelement, wie z.B. Holzbretter, Holzplatten oder Fußbodendielen, festgehalten. Es wird somit eine Querverstrebung der länglichen Träger hergestellt, damit die Lasten zum Aufbau der Verspannung in der horizontalen Richtung beim Verdichten des Lehms aufgenommen werden können. Das wenigstens eine Holzelement ist dabei bevorzugt an derjenigen Seite der länglichen Träger angeordnet, die im eingebauten Zustand nach oben gerichtet ist.

Alternativ oder zusätzlich kann beim erfindungsgemäßen Verfahren auch so vorgegangen werden, dass der Abstand durch zumindest ein quer zu den Trägern angeordnetes und zumindest an jenen Trägern, die zuäußerst angeordnet sind, festgelegtes Spann- oder Zugelement, bevorzugt ein Spannkabel oder eine Gewindestange, festgehalten wird. Anstelle der quer zu den Trägern angeordneten und an den Trägern festgelegten Holzelemente oder zusätzlich zu diesen nehmen bei dieser Alternative die Spann- oder Zugelemente die horizontal auftretenden Lasten beim vertikalen Verdichten auf, wobei bevorzugt die Spann- oder Zugelemente nur an den zuäußerst liegenden Trägern zugfest festgelegt sind und durch eventuell dazwischen liegende Träger nur durch Bohrungen in den Trägern hindurchgeführt sind.

Diese Ausführungsform des Verfahrens gestattet auch ein nachträgliches, zusätzliches Verdichten des Lehms, wenn die Spann- oder Zugelemente nach dem Verdichten des Lehms gespannt werden, wie dies einer bevorzugten Ausführungsform der vorliegenden Erfindung entspricht. Hierzu werden die Spann- oder Zugelemente je nach ihrer Art durch Spannschlösser, Spannmuttern und dergleichen gespannt und der Lehm zwischen den Trägern dadurch horizontal wie Spannbeton verspannt.

Versuche haben gezeigt, dass eine zufriedenstellende Statik der mit dem erfindungsgemäßen Verfahren hergestellten Lehm-Holz-Verbundelemente dann erreicht wird, wenn gemäß einer bevorzugten Ausführungsform der vorliegenden Erfindung das Verdichten des Lehms mit einer vertikalen Spannung von 1 N/mm² bis 9 N/mm², bevorzugt 3 N/mm² bis 7 N/mm² und einer daraus resultierenden horizontalen Spannung von 0,2 N/mm² bis 4 N/mm², bevorzugt 1,2 N/mm² bis 3 N/mm², erfolgt. Die horizontale Spannung wird hierbei in Querrichtung, d.h. quer, insbesondere senkrecht zur Längsrichtung der länglichen Träger gemessen.

Gemäß einer bevorzugten Ausführungsform der vorliegenden Erfindung wird eine weiter verbesserte Verdichtung und folglich auch Statik erreicht, wenn die länglichen Träger mit geneigten Seitenflächen bereitgestellt werden, sodass die zueinander weisenden, den Zwischenraum jeweils begrenzenden Seitenflächen zweier benachbarter Träger nach unten konvergieren. Dies bedeutet, dass der Querschnitt der Träger im Wesentlichen trapezförmig ist. Das resultierende Lehm-Holz-Verbundelement wird nach dem Trocknen beziehungsweise Aushärten des Lehms so in einem Gebäude verbaut, dass der verdichtete und in horizontaler Richtung verspannte Lehm zwischen den Trägern von den schrägen Seitenflächen vertikal von unten zusätzlich gestützt wird, wie dies im Bauwesen von Schlusssteinen bekannt ist. Außerdem entsteht dadurch im Zusammenhang mit den horizontalen Druckspannungen gleichsam ein "Druckgewölbe" im Lehm, das die Eigenschaften des als sekundäres Tragwerk wirkenden Lehms positiv beeinflusst. Bevorzugt werden die länglichen Träger mit sich entlang der den Zwischenraum begrenzenden Seitenflächen der Träger erstreckenden Leisten bereitgestellt, sodass der zwischen den Trägern verdichtete und getrocknete Lehm in vertikaler Richtung zusätzlich gestützt wird.

Zur Lösung der der Erfindung zugrunde liegenden Aufgabe ist gemäß einem zweiten Aspekt ein Lehm-Holz-Verbundelement nach Anspruch 8.

Unter einer Mehrzahl von Trägern wird hierbei eine Anzahl von zwei oder mehr Trägern verstanden.

Die nebeneinander und in Abstand voneinander angeordneten länglichen Träger bilden mit dem dazwischen liegenden Lehm ein vorgefertigtes Deckenelement, das als Gebäudedecke oder als Teil derselben eingesetzt werden kann.

Unter der Längsrichtung wird hierbei die Richtung der Längserstreckung der Träger verstanden. Unter der Querrichtung wird die quer zur Längserstreckung verlaufende Richtung verstanden, wobei die Längsrichtung und die Querrichtung bei Verwendung des Elements als Decke eines Gebäudes in der Deckenebene liegen.

Wenn die länglichen Träger parallel zueinander verlaufen, verläuft die Querrichtung gemäß einer bevorzugten Ausbildung senkrecht zur Längsrichtung.

Die Träger sind beispielsweise als Holzbalken ausgebildet. Insbesondere bestehen die Holzbalken aus Vollholz.

Die in Querrichtung herrschende Druckspannung beträgt vorzugsweise 0,2 bis 4 N/mm². Die Druckspannung kann eingebracht werden, wie dies im Zusammenhang mit dem erfindungsgemäßen Verfahren erläutert wurde. Es sind jedoch auch alternative Verfahren zur Erzeugung der Druckspannung denkbar.

Um die Druckspannung aufrechtzuerhalten, sind Haltemittel vorgesehen, welche die Träger in einem vorbestimmten Querabstand zueinander festhalten.

Die Haltemittel können beispielswiese den Zwischenraum jeweils überbrückende Holzelemente, wie z.B. Holzbretter, Holzplatten oder Fußbodendielen, umfassen, die mit den Trägern starr verbunden sind. Die Holzelemente bilden vorzugsweise eine durgehende Fläche aus, welche sich im Wesentlichen über die gesamte Längs- und Querasudehnung des Lehm-Holz-Verbundelements erstreckt. Bevorzugt bilden die Holzelemente hierbei eine Bodenfläche für den oberhalb der Decke angeordneten Raum des Gebäudes aus. Die Holzelemente können in einfacher Weise mittels Stiften, Nägeln, Schrauben oder Klammern und dgl. an den Trägern befestig sein.

Weiters können die Haltemittel in Querrichtung verlaufende Spannelemente, wie z.B. Spannkabeln oder Gewindestangen, umfassen, die an den Trägern angreifen und den Zwischenraum jeweils durchsetzen. Bevorzugt verlaufen die Spannelemente im rechten Winkel zu den länglichen Trägern, wobei eine Mehrzahl von Spannelementen in Längsrichtung der Träger verteilt an diesen angreift. Die Spannelemente können in den Lehm eingebettet sein oder auch außerhalb der Lehmschicht verlaufen.

Wie bereits erwähnt, sieht eine weitere bevorzugte Ausführung vor, dass die zueinander weisenden, den Zwischenraum jeweils begrenzenden Seitenflächen zweier benachbarter Träger nach unten konisch konvergierend ausgebildet sind oder mit einer sich in Längsrichtung erstreckenden Leiste versehen sind.

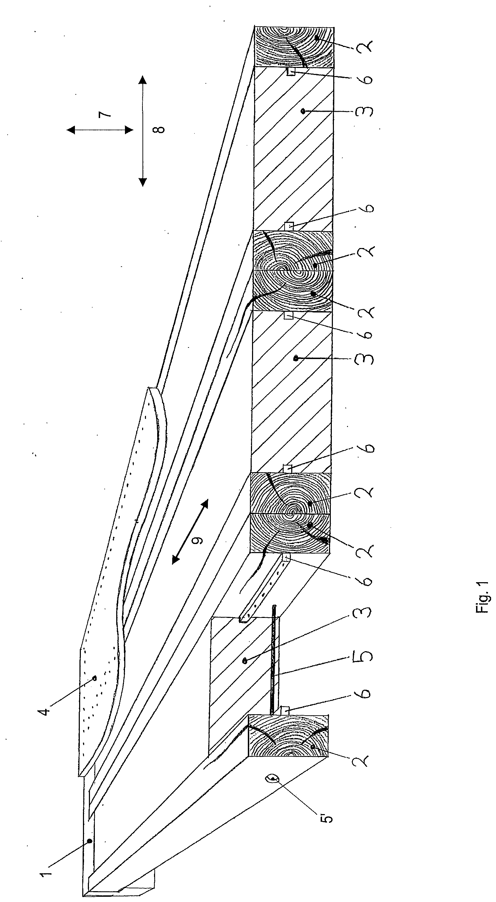

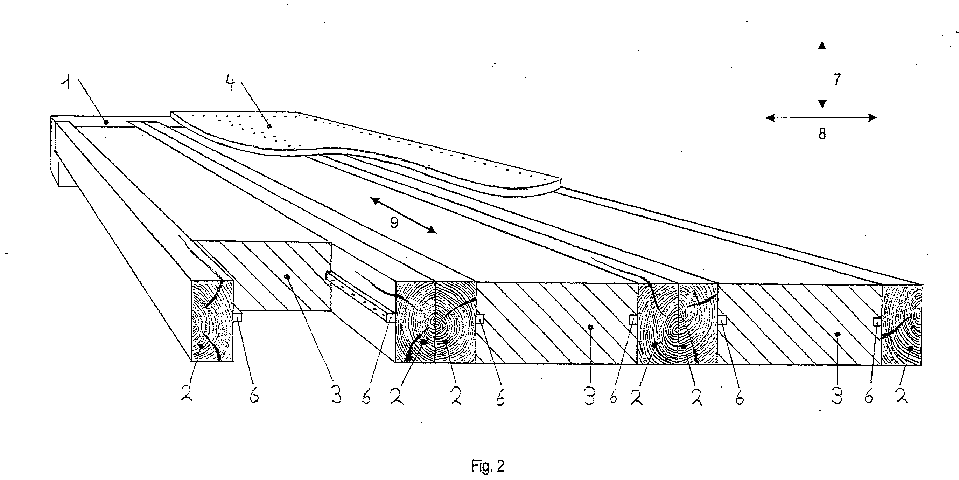

Die Erfindung wird nachfolgend anhand eines in der Zeichnung dargestellten Ausführungsbeispiels näher erläutert. Die Figuren 1 bis 11 zeigen hierin verschiedene Varianten von erfindungsgemäßen Lehm-Holz-Verbundelementen.

Das Lehm-Holz-Verbundelement gemäß Figur 1 umfasst vier parallele längliche Träger 2 mit rechteckigem Querschnitt, die sich in Längsrichtung 9 erstrecken. Die beiden mittleren Träger 2 sind aus zwei einzelnen Balken zusammengesetzt. Die Träger 2 sind nebeneinander und in Querrichtung 8 beabstandet voneinander angeordnet. Die Träger 2 sind an ihren Enden auf einem Auflager 1 abgestützt, wobei das Auflager zusätzlich zu seiner senkrechten Abstützfunktion auch ausgebildet sein kann, um die Träger 2 in Querrichtung im vorgegebenen Querabstand voneinander zu halten. Dies kann beispielsweise durch formschlüssige Aufnahme der Träger 2 in Ausnehmungen des Auflagers 1 realisiert werden.

Mit 4 ist eine auf das Lehm-Holz-Verbundelement aufgebrachte Fußbodenschicht bezeichnet, die mit Hilfe üblicher Verbindungselemente, wie z.B. Stiften, Nägeln oder Schrauben, an den Trägern 2 befestigt wird. Dadurch wird der Querabstand zwischen den Trägern 2 zusätzlich gesichert. Wenn das Auflager 1 keine Sicherung des Querabstands bereitstellt, stellt die Fußbodenschicht eine solche Sicherung des Querabstands bereit.

Im Zwischenraum zwischen zwei benachbarten Trägern 2 ist jeweils Lehm 3 angeordnet, der unter einer in Querrichtung 8 wirkenden Druckspannung steht. Die Druckspannung wird aufgebaut, indem Lehm 3 im umgedrehten Zustand des Elements (auf der Fußbodenschicht 4 aufliegend) in die Zwischenräume zwischen den Trägern 2 gefüllt und der Lehm 3 in der Folge durch Stampfen verdichtet wird.

Das Lehm-Holz-Verbundelement gemäß Figur 1 verfügt weiters zur Sicherung des Querabstandes zwischen den länglichen Trägern 2 über ein Spann- oder Zugelement 5 in Form einer Gewindestange, welche nach dem Verdichten des Lehms 3 durch die Wirkung einer Spannmutter 5' zusätzlich gespannt werden kann, um den Lehm 3 horizontal, d.h. in Querrichtung 8, zu verspannen.

Mit dem Bezugszeichen 6 sind an den Seitenflächen der Träger 2 befestigte Leisten bezeichnet, die sich über die gesamte Länge der Träger 2 erstrecken und dem Lehm zusätzliche Stützung in der durch den Doppelpfeil 7 bezeichneten vertikalen Richtung verleihen.

In Figur 2 und den weiteren Figuren sind gleiche Teile mit gleichen Bezugszeichen versehen. Das Lehm-Holz-Verbundelement gemäß Figur 2 gleicht jenem gemäß Figur 1 mit der Ausnahme, dass keine Spann- oder Zugelemente 5 vorgesehen sind.

In Figur 3 wurde Zwischenraum zwischen den Trägern 2 nicht vollständig mit Lehm 3 befüllt, jedoch umgreift die Lehmfüllung 3 wiederum Leisten 6 und es ist ein Spann- oder Zugelement 5 vorgesehen.

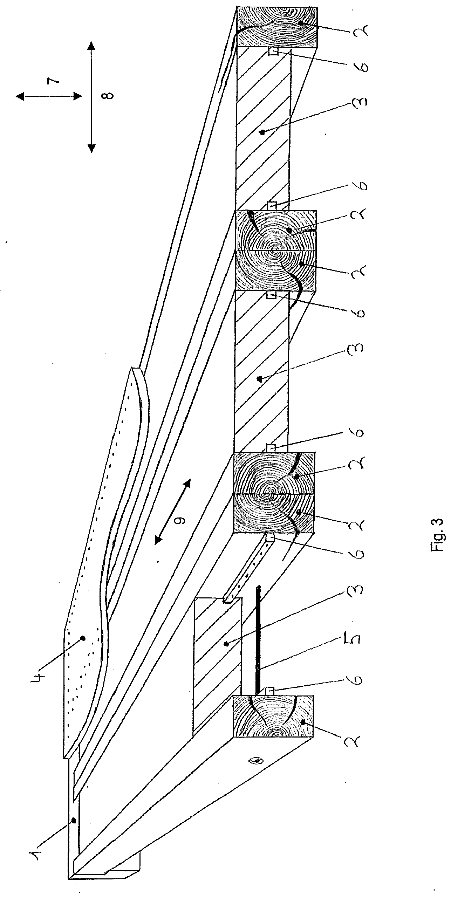

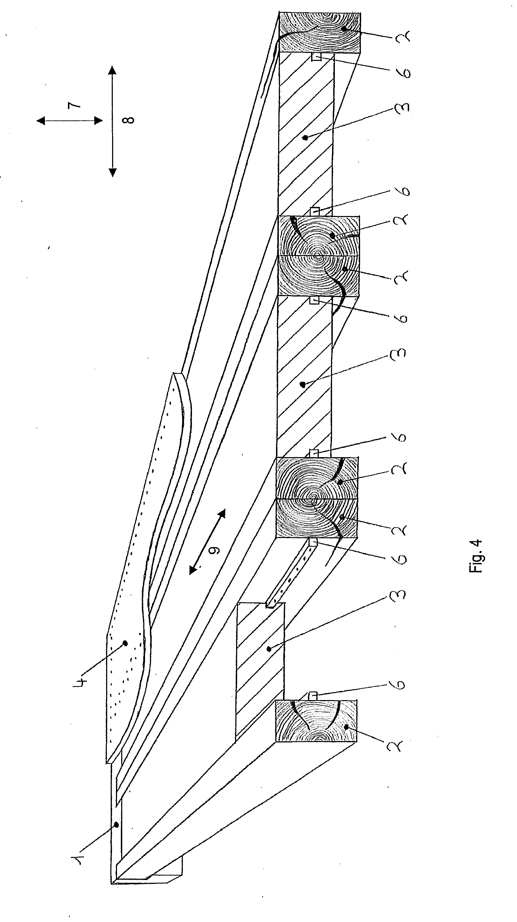

Das Lehm-Holz-Verbundelement gemäß Figur 4 entspricht jenem von Figur 3, jedoch wurde keine Spann- oder Zugelemente vorgesehen.

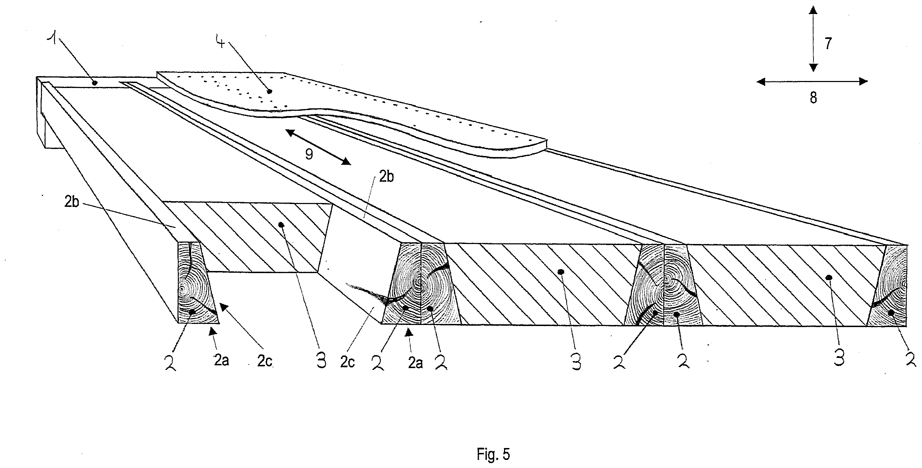

Das Lehm-Holz-Verbundelement gemäß Figur 5 weist längliche Träger 2 auf, deren den Zwischenraum seitlich begrenzende Seitenflächen 2c von einer Deckfläche 2b zu einer gegenüberliegenden Bodenfläche 2c konisch konvergierend ausgebildet sind.

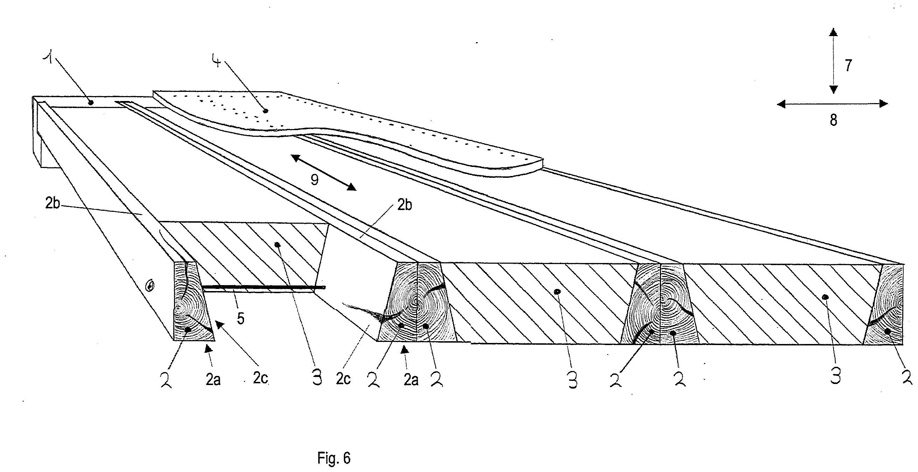

In Figur 6 ist gegenüber der Ausführungsform gemäß Figur 5 zusätzlich ein Spann- oder Zugelement 5 vorgesehen.

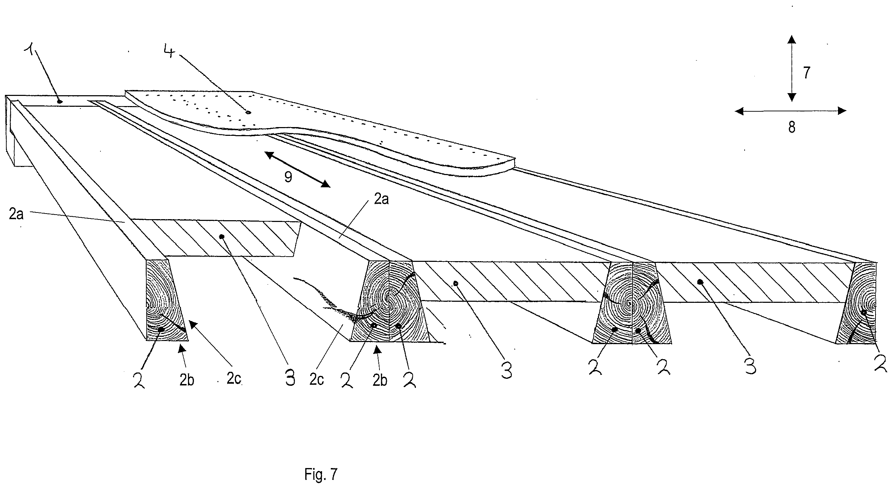

In Figur 7 wurde der Zwischenraum zwischen den Trägern 2 nicht vollständig mit Lehm 3 befüllt, sodass die Schichthöhe des Lehms 3 geringer ist als die Profilhöhe der Träger 2.

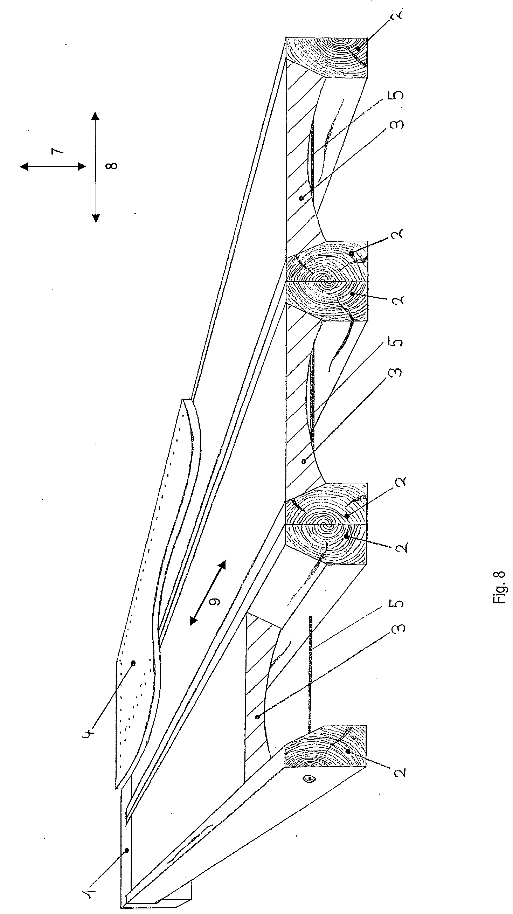

Bei der in Figur 8 dargestellten Ausführungsform des Lehm-Holz-Verbundelements ist zu erkennen, dass die Lehmfüllung 3 mit einer gewölbten Kontur ausgeführt und verdichtet wird, was statisch als günstig anzusehen ist. Zusätzlich ist ein Spann- oder Zugelement 5 vorgesehen.

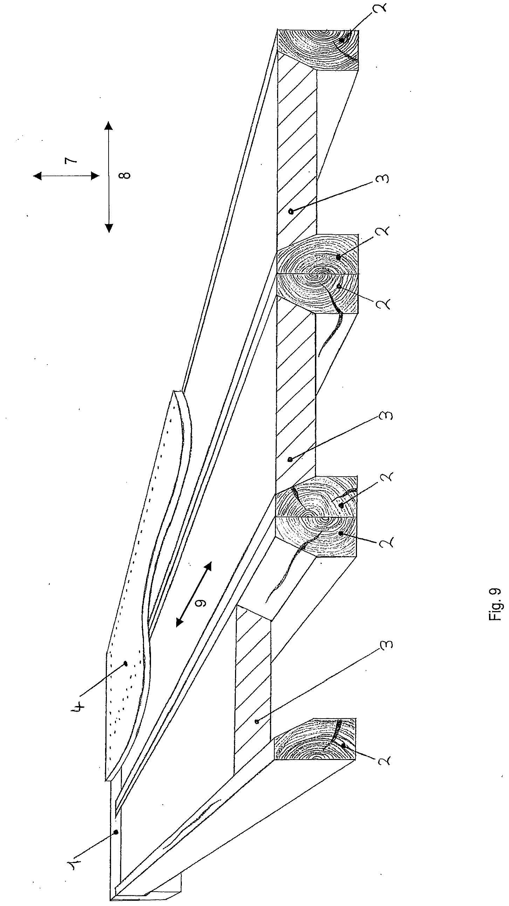

Figur 9 zeigt eine Ausführungsform der vorliegenden Erfindung, bei welcher der Lehm eine verringerte Schichtdicke aufweist, wobei die geneigten Seitenflächen der Träger 2 sich lediglich über die Schichtdicke des Lehms 3 erstrecken. Im anschließenden Bereich der Seitenflächen sind diese vertikal ausgebildet.

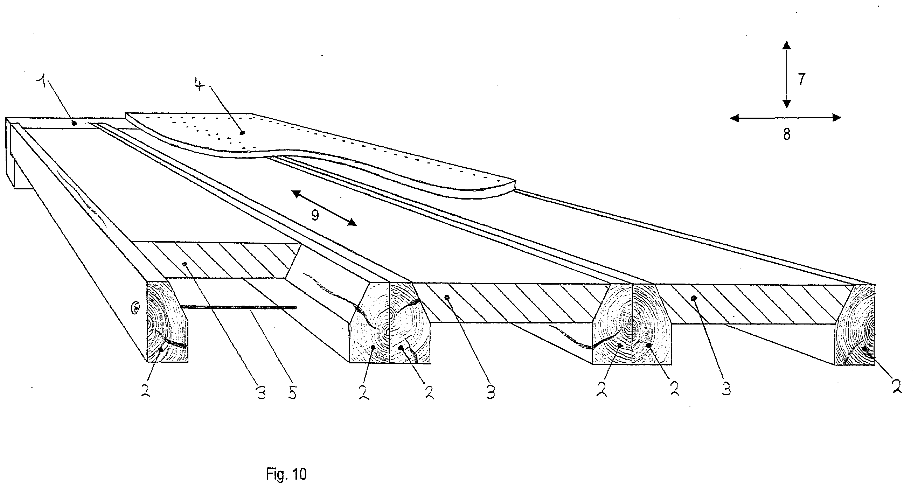

In Figur 10 ist gegenüber der Ausführungsform der Figur 9 wiederum ein Spann- oder Zugelement 5 vorgesehen.

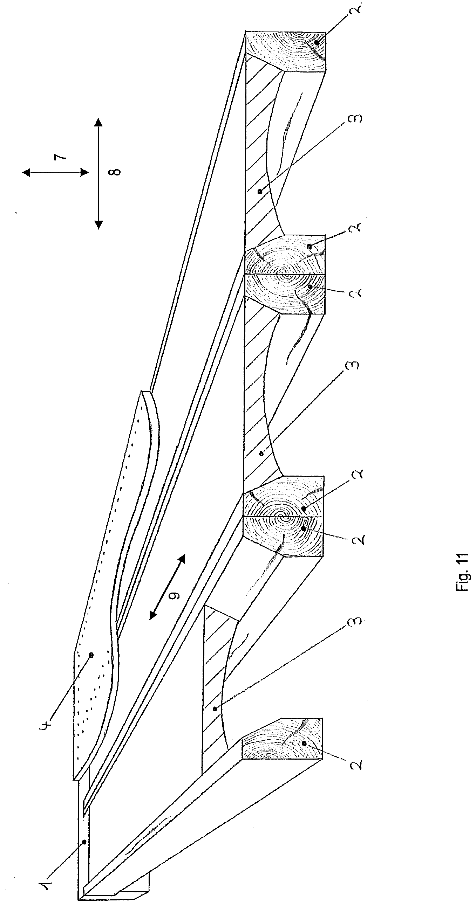

In Figur 11 ist das Lehm-Holz-Verbundelement mit gewölbter Lehmfüllung und ohne Spann- oder Zugelement dargestellt.

## Patentansprüche

1. Verfahren zum Herstellen eines Lehm-Holz-Verbundelements zur Verwendung als Deckenelement in einem Gebäude, **gekennzeichnet durch** zumindest die folgenden Schritte:
Bereitstellen einer Mehrzahl von länglichen Trägern (2) aus Holz,
Anordnen der Mehrzahl von länglichen Trägern (2) nebeneinander und in einem Querabstand voneinander auf einer Oberfläche, wobei zwischen benachbarten länglichen Trägern (2) jeweils ein Zwischenraum ausgebildet wird,
zumindest teilweises Befüllen des Zwischenraums bzw. der Zwischenräume mit Lehm (3), und
Verdichten des Lehms (3) unter Festhalten des Querabstands, insbesondere durch maschinelles Stampfen des Lehms (3), wodurch der Lehm (3) in Querrichtung (8) unter eine Druckspannung gesetzt wird, wobei Haltemittel zum Halten der Träger (2) in einem die Druckspannung aufrechterhaltenden Querabstand zueinander vorgesehen sind, sodass die Lehmschicht unter Verzicht auf die Anordnung einer die Lehmschicht von unten abstützenden Struktur selbsttragend wird.

2. Verfahren nach Anspruch 1, **dadurch gekennzeichnet, dass** der Querabstand durch zumindest ein quer zu den Trägern (2) angeordnetes und an den Trägern (2) festgelegtes Holzelement, wie z.B. Holzbretter, Holzplatten (4) oder Fußbodendielen, festgehalten wird.

3. Verfahren nach Anspruch 1, **dadurch gekennzeichnet, dass** der Abstand durch zumindest ein quer zu den Trägern (2) angeordnetes und zumindest an jenen Trägern (2), die zuäußerst angeordnet sind, festgelegtes Spannelement (5), bevorzugt ein Spannkabel oder eine Gewindestange, festgehalten wird.

4. Verfahren nach Anspruch 3, **dadurch gekennzeichnet, dass** die Spannelemente (5) nach dem Verdichten des Lehms (3) gespannt werden.

5. Verfahren nach einem der Ansprüche 1 bis 4, **dadurch gekennzeichnet, dass** das Verdichten des Lehms (3) mit einer vertikalen Spannung von 1 N/mm² bis 9 N/mm², bevorzugt 3 N/mm² bis 7 N/mm², und einer resultierenden horizontalen Spannung von 0,2 N/mm² bis 4 N/mm², bevorzugt 1 N/mm² bis 3 N/mm² erfolgt.

6. Verfahren nach einem der Ansprüche 1 bis 5, **dadurch gekennzeichnet, dass** die länglichen Träger (2) mit geneigten Seitenflächen (2c) bereitgestellt werden, sodass die zueinander weisenden, den Zwischenraum jeweils begrenzenden Seitenflächen (2c) zweier benachbarter Träger (3) nach unten konvergieren.

7. Verfahren nach einem der Ansprüche 1 bis 6, **dadurch gekennzeichnet, dass** die länglichen Träger (2) mit sich entlang der den Zwischenraum begrenzenden Seitenflächen (2c) der Träger erstreckenden Leisten (6) bereitgestellt werden.

8. Lehm-Holz-Verbundelement zur Verwendung als Deckenelement in einem Gebäude, umfassend eine Mehrzahl von sich in einer Längsrichtung (9) erstreckenden länglichen Trägern (2) aus Holz, die nebeneinander und unter Ausbildung jeweils eines Zwischenraums in einer Querrichtung (8) voneinander beabstandet angeordnet sind, und den Zwischenraum zwischen benachbarten Trägern (2) jeweils füllenden Lehm (3), **dadurch gekennzeichnet, dass** der Lehm (3) in Querrichtung (8) unter einer Druckspannung steht und Haltemittel zum Halten der Träger (2) in einem die Druckspannung aufrechterhaltenden Querabstand zueinander vorgesehen sind, sodass die Lehmschicht selbsttragend ist, und wobei keine Abstützung von unten durch eine von unten abstützende Struktur vorgesehen ist.

9. Lehm-Holz-Verbundelement nach Anspruch 8, **dadurch gekennzeichnet, dass** die Druckspannung 0,2 bis 4 N/mm² beträgt.

10. Lehm-Holz-Verbundelement nach Anspruch 8 oder 9, **dadurch gekennzeichnet, dass** die Träger (2) parallel zueinander verlaufen.

11. Lehm-Holz-Verbundelement nach Anspruch 10, **dadurch gekennzeichnet, dass** die Haltemittel den Zwischenraum jeweils überbrückende Holzelemente (1,4), wie z.B. Holzbretter, Holzplatten oder Fußbodendielen, umfassen, die mit den Trägern (2) starr verbunden sind.

12. Lehm-Holz-Verbundelement nach Anspruch 10 oder 11, **dadurch gekennzeichnet, dass** die Haltemittel Spannelemente (5), wie z.B. Spannkabeln oder Gewindestangen, umfassen, die an den Trägern (2) angreifen und den Zwischenraum jeweils durchsetzen.

13. Lehm-Holz-Verbundelement nach einem der Ansprüche 8 bis 12 **dadurch gekennzeichnet, dass** die Träger (2) aus Vollholz bestehen.

14. Lehm-Holz-Verbundelement nach einem der Ansprüche 8 bis 13 **dadurch gekennzeichnet, dass** die zueinander weisenden, den Zwischenraum jeweils begrenzenden Seitenflächen (2c) zweier benachbarter Träger (2) nach unten konisch konvergierend ausgebildet sind.

## Claims

1. Method for producing a clay-wood composite element for use as a ceiling element in a building, **characterised by** at least the following steps:
providing a plurality of elongate supports (2) made of wood,
arranging the plurality of elongate supports (2) next to one another and at a transverse distance from one another on a surface, in each case a gap being formed between adjacent elongate supports (2),
at least partially filling the gap or gaps with clay (3), and
compacting the clay (3) while maintaining the transverse distance, in particular by mechanical tamping of the clay (3), whereby the clay (3) is subjected to compressive stress in the transverse direction (8), holding means being provided for holding the supports (2) at a transverse distance from one another which maintains the compressive stress, so that the clay layer becomes self-supporting without the arrangement of a structure supporting the clay layer from below.

2. Method according to claim 1, **characterised in that** the transverse distance is maintained by at least one wooden element, such as wooden boards, wooden panels (4) or floorboards, which is arranged transversely to the supports (2) and fixed to the supports (2).

3. Method according to claim 1, **characterised in that** the distance is maintained by at least one tensioning element (5), preferably a tensioning cable or a threaded rod, which is arranged transversely to the supports (2) and fixed at least to the supports (2) which are arranged outermost.

4. Method according to claim 3, **characterised in that** the tensioning elements (5) are tensioned after compaction of the clay (3).

5. Method according to any of claims 1 to 4, **characterised in that** the compaction of the clay (3) takes place at a vertical tension of 1 N/mm² to 9 N/mm², preferably 3 N/mm² to 7 N/mm², and a resulting horizontal tension of 0.2 N/mm² to 4 N/mm², preferably 1 N/mm² to 3 N/mm².

6. Method according to any of claims 1 to 5, **characterised in that** the elongate supports (2) are provided with inclined side surfaces (2c) so that the mutually facing side surfaces (2c) of two adjacent supports (3) which in each case delimit the intermediate space converge downwards.

7. Method according to any of claims 1 to 6, **characterised in that** the elongate supports (2) are provided with strips (6) extending along the side surfaces (2c) of the supports delimiting the intermediate space.

8. Clay-wood composite element for use as a ceiling element in a building, comprising a plurality of elongate wooden supports (2) extending in a longitudinal direction (9), which are arranged next to one another and spaced apart from one another in a transverse direction (8), each wooden support forming an intermediate space, and clay (3) filling the intermediate space between adjacent supports (2), **characterised in that** the clay (3) is under compressive stress in the transverse direction (8) and holding means are provided for holding the supports (2) at a transverse distance from one another which maintains the compressive stress, so that the clay layer is self-supporting, and no support from below being provided by a structure supporting from below.

9. Clay-wood composite element according to claim 8,
**characterised in that** the compressive stress is 0.2 to 4 N/mm².

10. Clay-wood composite element according to either claim 8 or claim 9, **characterised in that** the supports (2) run in parallel with each other.

11. Clay-wood composite element according to claim 10, **characterised in that** the holding means comprise wooden elements (1,4), such as wooden boards, wooden panels or floorboards, in each case bridging the intermediate space, which wooden elements are rigidly connected to the supports (2).

12. Clay-wood composite element according to either claim 10 or claim 11, **characterised in that** the holding means comprise tensioning elements (5), such as tensioning cables or threaded rods, which in each case engage the supports (2) and penetrate the intermediate space.

13. Clay-wood composite element according to any of claims 8 to 12, **characterised in that** the supports (2) consist of solid wood.

14. Clay-wood composite element according to any of claims 8 to 13, **characterised in that** the mutually facing side surfaces (2c) of two adjacent supports (2) which in each case delimit the intermediate space are designed to converge conically downwards.

## Revendications

1. Procédé pour fabriquer un élément composite argile-bois à utiliser comme élément de plafond dans un bâtiment, **caractérisé par** au moins les étapes suivantes :
la fourniture d'une pluralité de supports longitudinaux (2) en bois,
la disposition de la pluralité de supports longitudinaux (2) les uns à côté des autres et à une distance transversale les uns des autres sur une surface, dans lequel respectivement un espace intermédiaire est réalisé entre des supports longitudinaux (2) voisins,
le remplissage au moins partiel de l'espace intermédiaire ou des espaces intermédiaires avec de l'argile (3), et
le compactage de l'argile (3) avec maintien de la distance transversale, en particulier par tassement mécanique de l'argile (3), moyennant quoi l'argile (3) est mise sous contrainte de compression dans la direction transversale (8), dans lequel des moyens de retenue pour retenir les supports (2) à une distance transversale les uns des autres conservant la contrainte de compression sont prévus, de sorte que la couche d'argile, en renonçant à la disposition d'une structure soutenant la couche d'argile par le bas, devient autoporteuse.

2. Procédé selon la revendication 1, **caractérisé en ce que** la distance transversale est maintenue par au moins un élément en bois disposé transversalement par rapport aux supports (2) et fixé sur les supports (2), comme par exemple des planches de bois, panneaux de bois (4) ou lames de plancher.

3. Procédé selon la revendication 1, **caractérisé en ce que** la distance est maintenue par au moins un élément tendeur (5) disposé transversalement par rapport aux supports (2) et fixé au moins sur les supports (2) qui sont disposés le plus à l'extérieur, de préférence un câble tendeur ou une tige filetée.

4. Procédé selon la revendication 3, **caractérisé en ce que** les éléments tendeurs (5) sont tendus après le compactage de l'argile (3).

5. Procédé selon l'une quelconque des revendications 1 à 4, **caractérisé en ce que** le compactage de l'argile (3) s'effectue avec une tension verticale de 1 N/mm² à 9 N/mm², de préférence 3 N/mm² à 7 N/mm², et une tension horizontale résultante de 0, 2 N/mm² à 4 N/mm², de préférence 1 N/mm² à 3 N/mm².

6. Procédé selon l'une quelconque des revendications 1 à 5, **caractérisé en ce que** les supports longitudinaux (2) sont fournis avec des surfaces latérales (2c) inclinées, de sorte que les surfaces latérales (2c) de deux supports (3) voisins dirigées l'une vers l'autre, délimitant respectivement l'espace intermédiaire, convergent vers le bas.

7. Procédé selon l'une quelconque des revendications 1 à 6, **caractérisé en ce que** les supports longitudinaux (2) sont fournis avec des baguettes (6) s'étendant le long des surfaces latérales (2c) des supports délimitant l'espace intermédiaire.

8. Elément composite argile-bois à utiliser comme élément de plafond dans un bâtiment, comprenant une pluralité de supports longitudinaux (2) en bois s'étendant dans une direction longitudinale (9), qui sont disposés les uns à côté des autres et à distance les uns des autres avec réalisation de respectivement un espace intermédiaire dans une direction transversale (8), et de l'argile (3) remplissant respectivement l'espace intermédiaire entre les supports (2) voisins,
**caractérisé en ce que** l'argile (3) est mise sous contrainte de compression dans la direction transversale (8) et des moyens de retenue pour retenir les supports (2) à une distance transversale les uns des autres conservant la contrainte de compression sont prévus, de sorte que la couche d'argile est autoporteuse, et dans lequel aucun soutien par le bas par une structure effectuant un soutien par le bas n'est prévu.

9. Elément composite argile-bois selon la revendication 8, **caractérisé en ce que** la contrainte de compression atteint 0,2 à 4 N/mm².

10. Elément composite argile-bois selon la revendication 8 ou 9, **caractérisé en ce que** les supports (2) sont parallèles les uns aux autres.

11. Elément composite argile-bois selon la revendication 10, **caractérisé en ce que** les moyens de retenue comprennent des éléments en bois (1, 4) comblant respectivement l'espace intermédiaire, tels que par exemple des planches de bois, panneaux de bois ou lames de plancher, qui sont reliés fixement aux supports (2).

12. Elément composite argile-bois selon la revendication 10 ou 11, **caractérisé en ce que** les moyens de retenue comprennent des élément tendeurs (5), tels que par exemple des câbles tendeurs ou tiges filetées, qui agissent sur les supports (2) et traversent respectivement l'espace intermédiaire.

13. Elément composite argile-bois selon l'une quelconque des revendications 8 à 12, **caractérisé en ce que** les supports (2) sont constitués de bois massif.

14. Elément composite argile-bois selon l'une quelconque des revendications 8 à 13, **caractérisé en ce que** les surfaces latérales (2c) de deux supports (2) voisins dirigées l'une vers l'autre, délimitant respectivement l'espace intermédiaire, sont réalisées de manière à converger coniquement vers le bas.
